**Europäisches Patentamt**

**European Patent Office**

**Office européen des brevets**

(11) Veröffentlichungsnummer: **0 217 731**
**B1**

(12) **EUROPÄISCHE PATENTSCHRIFT**

(45) Veröffentlichungstag der Patentschrift:
**02.11.89**

(51) Int. Cl.⁴: **H02B 1/16**

(21) Anmeldenummer: **86730124.4**

(22) Anmeldetag: **12.08.86**

(54) **Metallgekapselte, druckgasisolierte Hochspannungsschaltanlage mit Erdungsschaltern.**

(30) Priorität: **30.08.85 DE 3531492**

(43) Veröffentlichungstag der Anmeldung:
**08.04.87 Patentblatt 87/15**

(45) Bekanntmachung des Hinweises auf die Patenterteilung:
**02.11.89 Patentblatt 89/44**

(84) Benannte Vertragsstaaten:
**BE CH DE FR GB LI NL SE**

(56) Entgegenhaltungen:
**CH-A- 273 219**

**SIEMENS REVIEW, Band 43, Nr. 5, Mai 1976,
Seiten 204-209, Erlangen, DE; D. FISCHER et al.:
"Three-phase encapsulated
SF6-insulated 8D.6 switchgear for 123 to 145 kV"
PATENTS ABSTRACTS OF JAPAN, Band 1, Nr. 135, 9.
November 1977; Seite 6331 E 78; & JP-A-53 79242**

(73) Patentinhaber: **Siemens Aktiengesellschaft,
Wittelsbacherplatz 2, D-8000 München 2(DE)**

(72) Erfinder: **Dambietz, Hans-Peter, Dipl.-Ing.,
Feldstrasse 47, D-1000 Berlin 20(DE)**
Erfinder: **Haarhuis, Jürgen, Jahnstrasse 17,
D-1000 Berlin 61(DE)**
Erfinder: **Lorenz, Dieter, Dipl.-Ing., Gärtnerstrasse 18,
D-1000 Berlin 45(DE)**

ACTORUM AG

## Beschreibung

Die Erfindung bezieht sich auf eine metallgekapselte, druckgasisolierte Hochspannungsschaltanlage mit Schaltfeldern und Sammelschienen, deren Längsachse senkrecht zur Phasenstrombahnebene der Schaltfelder verläuft, bei der in den Schaltfeldern oder an den Sammelschienen Erdungsschalter vorgesehen sind, deren Erdungsschaltstift, der im eingeschalteten Zustand die Metallkapselung mit dem Leiter der Schaltfelder oder mit der Sammelschiene verbindet, zur Phasenstrombahnebene der Schaltfelder einen spitzen oder stumpfen Winkel bildet.

Bei derartigen bekannten metallgekapselten, druckgasisolierten Hochspannungsschaltanlagen, sieh z. B. Siemens Review, 1976, Seite 204 bis 209, wird die winklig zur Phasenstrombahnebene stehende Anordnung der Erdungsschalter vorgenommen wenn es sich um eine dreiphasig gekapselte Anlage handelt, damit alle drei Erdungsschalter auf einer Durchmesserebene des Kapselungsgehäuses liegen.

Es ist weiterhin aus den Brown Boveri Mitteilungen 1977, Bild 1 auf Seite 646 bekannt, bei einer metallgekapselten, druckgasisolierten Hochspannungsschaltanlage Schnellerder am Leitungsabgang einzusetzen, die somit in der Phasenstrombahnebene des Schaltfeldes liegen, und Arbeitserder an den Enden der Sammelschiene anzuordnen, die mithin senkrecht zur Phasenstrombahnebene liegen. Die Erdungsschalter, insbesondere die welche in der Strombahnebene liegen, beeinflussen aber die Höhe bzw. die Tiefe des Schaltfeldes, auch wenn sie möglichst in Lücken zwischen anderen Schaltgeräten gelegt sind, was besonders bei einphasig gekapselten Anlagen nachteilig ist.

Der Erfindung liegt die Aufgabe zugrunde, den Raumbedarf von einphasig metallgekapselten, druckgasisolierten Hochspannungsschaltanlagen zu verringern, indem der räumliche Aufbau der Schaltfelder durch Erdungsschalter nicht beeinflußt werden soll.

Zur Lösung dieser Aufgabe beträgt gemäß der Erfindung bei einphasig gekapselten Schaltfeldern der Winkel des Erdungsschaltstiftes zur Phasenstrombahnebene 45° bzw. 135°. Durch diese bestimmte Herausklappung des Erdungsschalters aus der Phasenstrombahnebene wird eine weitgehende Raumersparnis erzielt, ohne daß bei den einphasig gekapselten Schaltfeldern der Abstand zwischen den einzelnen Phasen infolge der Erdungsschalter vergrößert werden muß.

Diese schräg im Raum mit 45° bzw. 135° zu der Phasenstrombahnebene liegende Anordnung des Erdungsschalters hat weiterhin den Vorteil, daß die bei Erdungsschaltern üblichen Sichtzeichen zur Signalisierung der Stellung des Erdungsschaltstiftes besser von den Außenseiten der Hochspannungsschaltanlage erkennbar sind, da sie nicht durch der Phase zugehörige andere Schaltgeräte abgedeckt sind. Die Antriebe der so schräg angeordneten Erdungsschalter lassen sich bei mehreren hintereinander liegenden einphasig gekapselten Anlagen leicht zur Ersparnis miteinander koppeln.

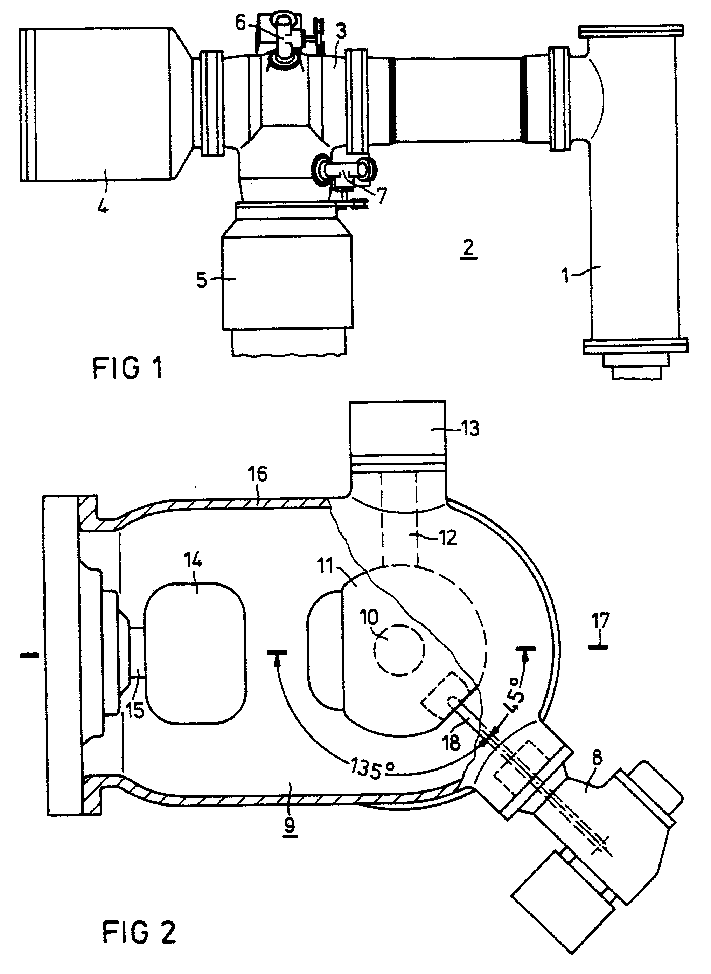

Im folgenden sei die Erfindung noch anhand der in den Figuren 1 und 2 dargestellten Ausführungsbeispiele näher erläutert. Figur 1 zeigt eine seitliche Ansicht eines Teils eines Schaltfeldes einer einphasig metallgekapselten, druckgasisolierten Hochspannungsschaltanlage mit gemäß der Erfindung angeordneten Erdungsschaltern. Die Phasenstrombahnebene dieses Schaltfeldes fällt mit der Papierebene zusammen. In Figur 2 ist als zweites Ausführungsbeispiel ein senkrecht zur Phasenstrombahnebene liegender Teilschnitt durch einen Trennschalter mit gemäß der Erfindung angeordnetem Erdungsschalter dargestellt.

Bei dem Ausführungsbeispiel nach Figur 1 enthält das von einem Kabelabzweig 1 ausgehende Schaltfeld 2, dessen Phasenstrombahnebene in der Papierebene liegt, das Kapselungsgehäuse 3 eines Trennschalters, das T-förmig ausgebildet ist und an dem ein Spannungswandler 4 und ein zum Leistungsschalter führender Stromwandler 5 angeschlossen ist. Außerdem trägt dieses Kapselungsgehäuse 3 einen Erdungsschalter 6, der als Schnellerder arbeitet, und einen Erdungsschalter 7, der als Arbeitserder ausgebildet ist. Wie sich aus der perspektivischen Ansicht ergibt, bilden bei diesen Erdungsschaltern 6 bzw. 7 die innenliegenden, nicht ersehbaren Erdungsschaltstifte einen Winkel von 45° bzw. 135° zur Phasenstrombahnebene.

Die gleiche Anordnung eines Erdungsschalters 8 unter 45° zeigt das in Figur 2 dargestellte etwas abgewandelte Ausführungsbeispiel. Hier ist ein Tennschalter 9 teilweise geschnitten dargestellt, bei dem der gestrichelt angedeutete Leiter 10 des Schaltfeldes in eine kuglige Schirmelektrode 11 mündet, die den nicht dargestellten Schaltstift des Trennschalters 9 enthält, sowie Antriebsteile, die über die gestrichelt angedeutete Isolierwelle 12 und dem äußeren Antrieb 13 die Bewegung des Schaltstiftes des Trennschalters 9 auslösen. Der Schaltstift des Trennschalters 9 steht senkrecht zur Längsachse des Leiters 10 und verbindet die Schirmelektrode 11 dann mit der Schirmelektrode 14 und dem mit dieser verbundenen Leiter 15 dessen Längsachse mit der Längsachse des Schaltstiftes des Trennschalters 9 übereinstimmt. Aufgrund dieses beschriebenen Leiterverlaufs innerhalb der Metallkapselung 16 des Trennschalters 9 ergibt sich, daß die Phasenstrombahnebene 17, die lediglich durch einige dicke Teilstriche angedeutet ist, senkrecht zur Papierebene steht. Der Erdungsschaltstift 18 des Erdungsschalters 8 verbindet im eingeschalteten Zustand die Metallkapselung 16 mit der Schirmelektrode 11 und somit mit dem Leiter 10 des Schaltfeldes. Die Längsachse des Erdungsschaltstiftes 18 steht dabei in einem Winkel von 45° bzw. 135° auf der Phasenstrombahnebene 17, wie dies in der Figur 2 durch Winkelpfeile angedeutet ist. Durch diese schräg aus der Phasenstrombahnebene 17 herausgedrehte Anordnung des Erdungsschalters 8 ist dessen Raumbedarf in den beiden, die Abmessungen eines Schaltfeldes bestimmenden Ebenen, nämlich in der Phasenstrombahnebene 17 und in der Ebene senkrecht stehend dazu, die den Abstand zwischen den einzelnen Phasen bestimmt, wesentlich kleiner als befände sich der Erdungsschalter, wie bisher üblich, nur in einer dieser beiden Ebenen angeordnet.

**Patentansprüche**

1. Metallgekapselte, druckgasisolierte Schaltanlage mit Schaltfeldern (2) und Sammelschienen, deren Längsachse senkrecht zur Phasenstrombahnebene (17) der Schaltfelder (2) verläuft, bei der in den Schaltfeldern (2) oder an den Sammelschienen Erdungsschalter (6, 7, 8) vorgesehen sind, deren Erdungsschaltstift (18), der im eingeschalteten Zustand die Metallkapselung (16) mit dem Leiter (10) der Schaltfelder (2) oder mit der Sammelschiene verbindet, zur Phasenstrombahnebene (17) der Schaltfelder (2) einen spitzen oder stumpfen Winkel bildet **dadurch gekennzeichnet**, daß bei einphasig gekapselten Schaltfeldern der Winkel des Erdungsschaltstiftes (18) zur Phasenstrombahnebene (17) 45° bzw. 135° beträgt.

**Claims**

1. Metal-enclosed, compressed gas-insulated switching station with panels (2) and busbars, the longitudinal axis of which runs perpendicular to the phase current path plane (17) of the switch panels (2), in which there are provided in the switch panels (2) or on the busbars earthing switches (6, 7, 8) the earthing switching pin (18) of which, connecting in the switched-on state the metal enclosure (16) with the conductor (10) of the switch panels (2) or with the busbar, forms an acute or obtuse angle in relation to the phase current path plane (17) of the switch panels (2), characterised in that in the case of switch panels enclosed in a single-phase manner the angle of the earthing switching pin (18) in relation to the phase current path plane (17) amounts to 45° to 135°.

**Revendications**

1. Installation de distribution électrique haute tension, du type à blindage métallique et à isolation par un gaz sous pression, avec des travées (2) et des barres omnibus, dont l'axe longitudinal s'étend perpendiculairement au plan (17) des pistes de passage des courants de phase des travées (2), installation dans laquelle sont prévus, dans les travées (2) ou dans les barres omnibus, des interrupteurs de mise à la terre (6, 7, 8) dont la cheville de commutation de mise à la terre (18) qui, dans son état de fermeture, relie le blindage métallique (16) avec le conducteur (10) des travées (2), ou avec la barre omnibus, et qui forme avec le plan (17) des pistes de passage du courant de phase des travées (2), un angle aigu ou obtus, caractérisée par le fait que dans le cas de travées monophasées blindées, l'angle formé par la cheville de commutation de mise à la terre (18) avec le plan des pistes de passage des courants de phase (17), est égal à 45° ou à 135°.

FIG 1

FIG 2